# DEMANDE DE BREVET EUROPEEN

(11) **EP 1 384 979 A1**
(43) Date de publication de la demande: **28.01.2004**
(21) Numéro de dépôt: 03102232.0
(22) Date de dépôt: 18.07.2003
(51) Int. Cl.: G01K 1/14, H01R 13/66

(54) **Sonde de contact**

(30) Priorité: 23.07.2002 FR 0209319
(71) Demandeur: C.F.C.A. Finances, 79350 Chiche (FR)
(72) Inventeur: Scrabalat, Philippe, 94230, Cachan (FR); Vota, Alain, 38800, Pont de Claix (FR)
(74) Mandataire: Vuillermoz, Bruno

(57) **Abrégé**

Cette sonde de contact comprend :
- un support ou embase (1), destiné à accueillir un capteur d'une grandeur physique déterminée, support duquel partent les fils électriques (7) acheminant le ou les signaux détectés ou mesurés par ledit capteur en vue de leur traitement ultérieur, le capteur étant monté sur un module indépendant, enfichable au sein du support ou embase (1) ;
- un organe de fixation réversible dudit support (1), agencé de telle sorte à mettre en contact le capteur avec l'élément au niveau duquel on souhaite déterminer ou mesurer ladite grandeur physique.

Les fils électriques dudit support sont surmoulés au sein de celui-ci, de telle sorte à définir deux fiches d'entrée femelles (4, 5), susceptibles de recevoir les connexions mâles du module intégrant le capteur par simple insertion.

En outre, le support (1) présente une fente (2), issue du moulage, destinée à permettre le passage d'une agrafe de fixation réversible constituant l'organe de fixation dudit support, sur l'élément considéré.

## Description

L'invention concerne une sonde de contact. Une telle sonde de contact est bien connue en soi, et a pour objectif de déterminer ou mesurer une grandeur physique, telle que la température, par positionnement d'un capteur approprié au contact d'une canalisation, et de manière générale d'un élément, par exemple dans lequel circule un fluide.

Traditionnellement, de telles sondes de contact sont constituées d'une pièce réalisée en matière plastique, au niveau de laquelle sont intégrées des languettes métalliques conductrices d'électricité, associées à un composant électrique, recevant notamment le capteur considéré.

Les fils de connexion du composant sont soudés, par exemple à l'étain, sur les languettes métalliques, auxquels sont connectés les fils de connexion et de transmission du signal capté par la sonde ainsi réalisée.

Si sur le strict plan de la détermination de la grandeur physique recherchée, ces sondes de contact remplissent les fonctions qui leurs sont dévolues, en revanche, le composant en tant que tel n'est pas interchangeable, sauf à changer l'intégralité de la sonde.

En outre, la fixation de la sonde sur la canalisation, et de manière générale sur l'élément au sein duquel transite le fluide, est constituée d'une agrafe métallique, solidaire de la sonde.

Dès lors que l'on souhaite mettre en place une telle sonde sur une canalisation de diamètre plus important, ou au contraire, moins important, l'agrafe n'est pas adaptée, de sorte que là encore, il convient de changer la sonde dans son intégralité.

L'objectif de la présente invention est de surmonter ces inconvénients.

Elle vise en effet à proposer une sonde de contact permettant tout d'abord l'interchangeabilité du composant, et notamment du capteur de contact, et parallèlement permettant également l'interchangeabilité du moyen de fixation réversible de ladite sonde au niveau de l'élément en contact duquel elle est destinée à venir se positionner.

Cette sonde de contact comprend :
- un support, destiné à accueillir un capteur d'une grandeur physique déterminée, support duquel partent les connexions électriques acheminant le ou les signaux détectés ou mesurés par ledit capteur ;
- un organe de fixation réversible dudit support, agencé de telle sorte à mettre en contact le capteur avec l'élément au niveau duquel on souhaite déterminer ou mesurer ladite grandeur physique.

Cette sonde de contact se caractérise :
- en ce que le capteur est monté sur un module indépendant, enfichable au sein du support ;
- en ce que les connexions électriques dudit support sont surmoulées au sein de celui-ci, de telle sorte à définir deux fiches d'entrée femelles, susceptibles de recevoir les connexions mâles du module intégrant le capteur par simple insertion ;
- et en ce que le support présente une fente, issue du moulage, destinée à permettre le passage d'une agrafe de fixation réversible constituant l'organe de fixation dudit support, sur l'élément considéré.

En d'autres termes, l'invention consiste à conférer à la sonde de contact en question tout d'abord le caractère modulaire, offrant notamment la possibilité de l'interchangeabilité du capteur par rapport au support, en comprenant un support de connectique adapté, et d'autre part, également l'interchangeabilité du moyen de fixation dudit support sur l'élément, et de manière générale, la canalisation concernée.

Ce faisant, en cas de défaillance dudit capteur, il suffit alors de le remplacer, et non pas de procéder au remplacement intégral de la sonde, comme c'était le cas avec les dispositifs de l'art antérieur.

Selon l'invention, ledit support présente une fenêtre sur l'une de ses faces, afin de libérer l'accès du capteur, et permettre le contact de celui-ci avec l'élément au niveau duquel on souhaite déterminer ou mesurer la grandeur physique.

Par ailleurs, la fente présente au niveau de son entrée un moyen de blocage réversible, avantageusement issu du moulage, visant à s'opposer au retrait intempestif de l'agrafe de fixation hors de ladite fente.

Selon une autre caractéristique de l'invention, les deux fiches de connexion électrique femelles du support sont surabondamment isolées électriquement l'une de l'autre, au moyen d'une paroi plastique, également avantageusement issue de moulage.

Ce faisant, on évite tout court-circuit ou toute formation d'arc électrique, lors de la mise en contact des connexions mâles du module du capteur avec lesdites fiches de connexion électrique femelles du support.

Avantageusement, la matière mise en oeuvre pour réaliser le surmoulage desdites fiches, et donc la constitution du support, est choisie dans le groupe comprenant le polyamide 6, et le polyamide 6/6 chargé ou non en billes ou fibres de verre jusqu'à 30 % en poids.

Dans une forme particulière de réalisation de l'invention, le capteur est constitué par une thermistance. Cependant, celui-ci peut être constitué d'un composant à effet HALL, qui dans ce cas là, est susceptible de détecter, par variation du champ magnétique, le passage d'éléments ferreux à son niveau, tels que des vis, écrous, billes, copeaux, etc., avec pour objectif par exemple le tri entre éléments ferreux et non ferreux. Ce capteur peut également est constitué par une cellule photoélectrique, un mini interrupteur, et de manière générale un capteur de type électronique ou électromécanique, en fonction de la détection à réaliser.

La manière de réaliser la présente invention et les avantages qui en découlent ressortiront mieux de l'exemple de réalisation qui suit donné à titre indicatif et non limitatif à l'appui des figures annexées.
La figure 1 est une représentation schématique en perspective de l'embase de la sonde de contact conforme à l'invention.
La figure 2 est une vue analogue à la figure 1, avec l'embase munie de son agrafe de fixation, positionnée au niveau d'une canalisation.

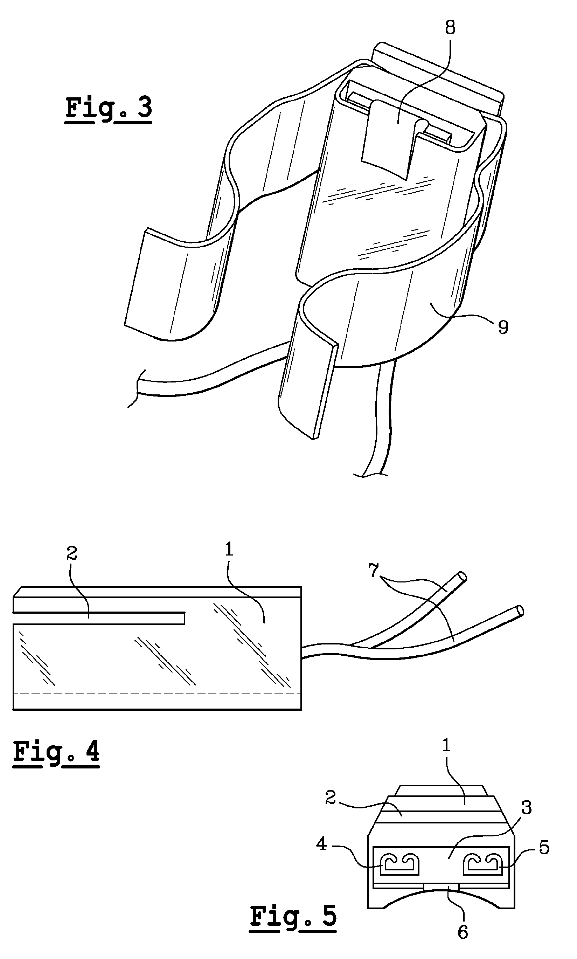

La figure 3 est une vue schématique en perspective de l'embase munie de son agrafe de fixation.
La figure 4 est une vue schématique en section longitudinale de l'embase, dont la figure 5 est une vue de face.
Les figures 6 et 7 sont des vues de section illustrant l'embase avec l'agrafe en section longitudinale et vue de face.
La figure 8 est une représentation schématique vue de face du module muni de son composant destiné à être enfiché dans le support constitutif de la sonde.
La figure 9 est une vue du dessus dudit module.
Les figures 10 est une représentation schématique en éclaté, illustrant les différentes opérations d'un mode de réalisation dudit module.

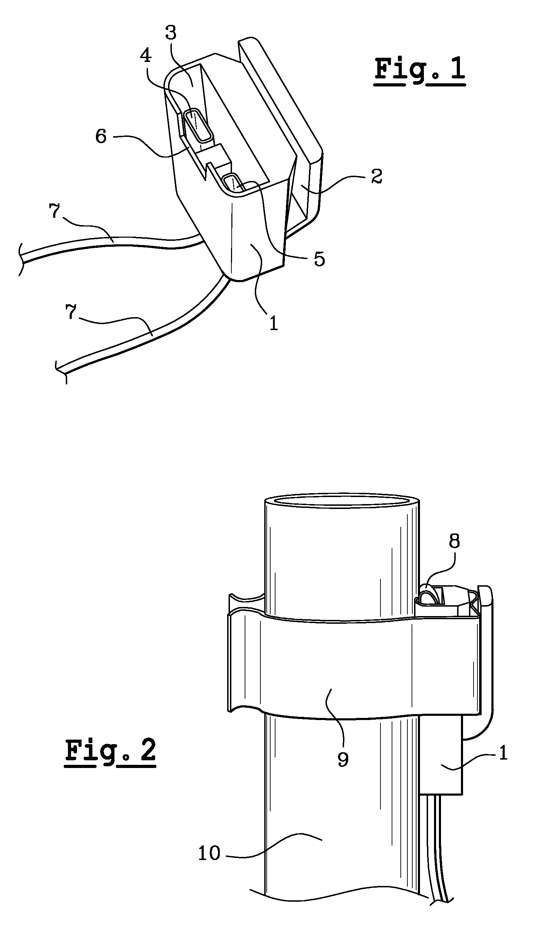

On a donc représenté en figure 1, l'embase d'une sonde de contact conforme à la présente invention.

Dans la suite de la description, cette embase est plus particulièrement décrite en relation avec une sonde de température, plus spécifiquement destinée aux chauffe-eaux et aux chaudières.

Cette sonde de contact comprend fondamentalement un support ou embase (1) réalisé en matière plastique, et assurant le surmoulage de fiches de connexion électrique femelles, respectivement (4) et (5), connectées aux fils électriques (7), destinés à acheminer le ou les signaux électriques, correspondant à la grandeur physique mesurée à l'aide de cette sonde de température, et plus spécifiquement à l'aide d'un capteur approprié, associé au support (1), ainsi qu'il va être décrit plus en détail ultérieurement.

Ledit support (1) est destiné à être solidarisé réversiblement au niveau d'une canalisation (10), à l'intérieur de laquelle circule le fluide, et en l'espèce de l'eau chaude, dont on souhaite mesurer la température.

Comme déjà dit, le support est réalisé par surmoulage de fiches femelles de connexion électriques, respectivement (4) et (5), desquelles partent les fils électriques (7), assurant l'acheminement des signaux détectés par le capteur, et en l'espèce, une thermistance, donc représentative de la température mesurée.

Selon une caractéristique avantageuse non représentée, ces deux fiches femelles de connexion (4) et (5) sont séparées l'une de l'autre part une cloison plastique, également issue de surmoulage, de telle sorte à s'affranchir de tout risque de contact électrique entre les deux fiches d'une part, et d'autre part, d'éviter la formation de l'arc électrique classiquement observé lors de l'insertion au niveau des fiches (4) et (5) des fiches mâles correspondantes (20) du module (8) portant le composant de mesure de la grandeur physique, et en l'espèce, de la température.

Ce support (1) est destiné à être fixé réversiblement au niveau de la canalisation (10) au moyen d'une agrafe (9), réalisée en un matériau présentant des propriétés élastiques, afin de permettre une adaptation à ladite canalisation et son maintien au niveau de celle-ci de manière réversible.

Cette agrafe (9), typiquement réalisée en métal, vient s'insérer dans une fente (2) ménagée sur la face supérieure du support (1). Elle est avantageusement maintenue dans cette position au moyen d'un système de blocage et typiquement une saillie formant bourrelet, propre à s'opposer au retrait intempestif de l'agrafe hors de la fente (2).

On comprend bien cependant, que cette agrafe (9) peut-être retirée de la fente en effectuant une pression en direction de la sortie de la fente, et ce de manière relativement aisée.

On comprend bien également que, en fonction du diamètre de la canalisation au niveau de laquelle est destinée à venir se fixer le support (1), on peut insérer dans la fente (2) une agrafe de forme et de dimensions appropriées, et ce de manière très aisée, optimisant de fait le caractère modulaire du support, conforme à la présente invention.

Le support présente au niveau de sa face opposée à la fente (2) une fenêtre (6), destinée à libérer un volume nécessaire au composant, et en l'espèce une thermistance, pour être en contact effectif avec la canalisation (10).

Le matériau constitutif du support est avantageusement du polyamide 6 ou du polyamide 6/6 chargé ou non en billes ou fibres de verre. Ce matériau est ainsi choisi car il est aisément injectable, il présente une bonne tenue en température, et il est isolant électrique. De plus, il présente une bonne élasticité, susceptible de favoriser l'introduction de l'agrafe (9) au niveau de la fente (2).

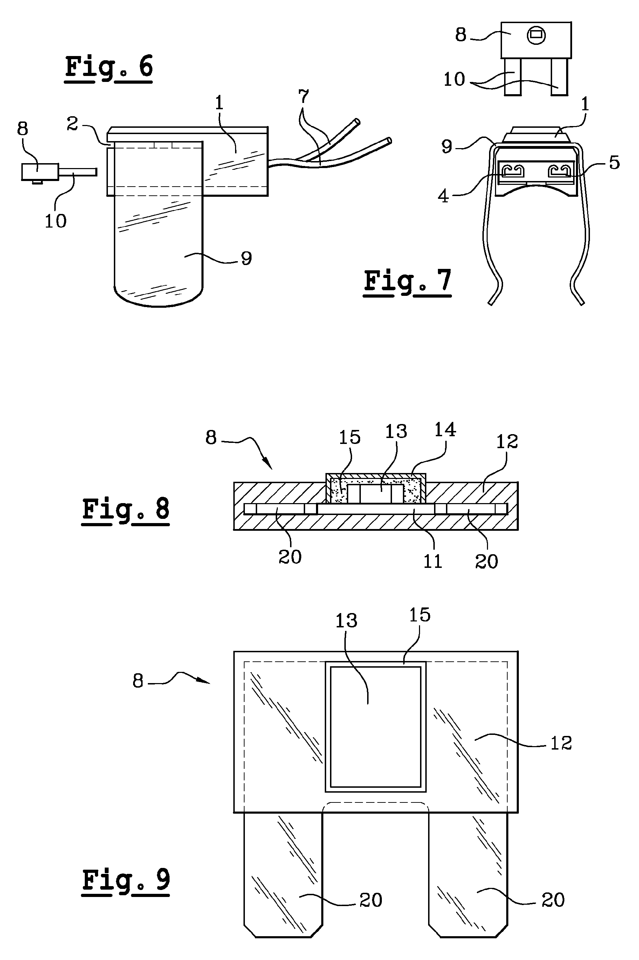

Le module (8) portant le composant de mesure, et en l'espèce une thermistance, va être décrit maintenant plus en détail en relation avec les figures 8 à 10.

Ce module (8), ainsi que déjà dit, est destiné à être enfiché dans le volume (3) défini à l'intérieur du support (1).

Il comporte deux fiches mâles (20) conductrices de l'électricité, de forme correspondante aux fiches femelles (4) et (5) dudit support (1).

Ce module (8) est sensiblement plan, ainsi qu'on peut bien l'observer sur les figures 7 et 8, et est réalisé de la manière suivante.

Il est typiquement constitué d'un circuit imprimé, dont le support rigide (11) présente deux prolongements linéaires, destinés à faire fonction de fiches mâles (20), ces prolongements étant typiquement constitués d'une lame de cuivre, d'épaisseur voisine de 35 µm.

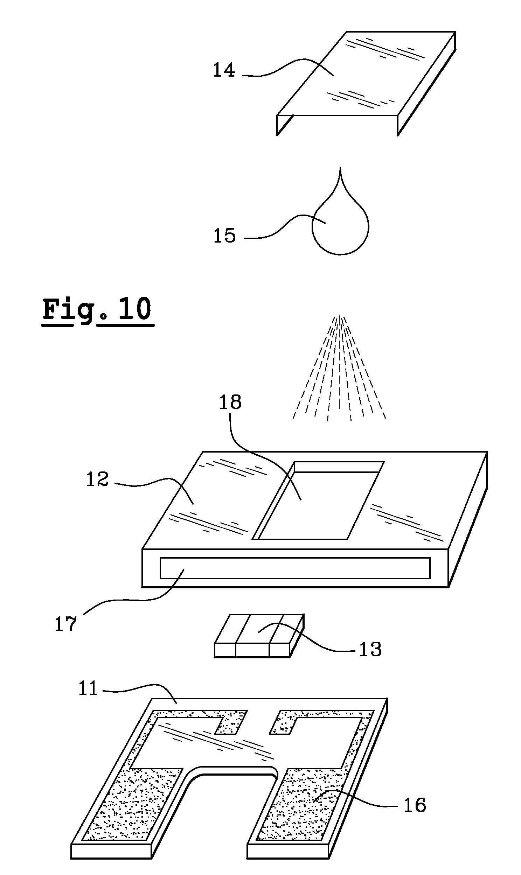

Ce circuit imprimé (16) est revêtu sur un support (11) PCB (résine époxy type FR4), et d'épaisseur typique de 0,8 mm. Il recouvre donc l'une des faces desdits prolongements, ainsi qu'on peut bien l'observer sur la figure 10.

Les deux extrémités libres dudit circuit (16) reçoivent le composant, typiquement le capteur à mettre en oeuvre, et en l'espèce une thermistance (13), soudée à l'étain au niveau desdites extrémités.

L'ensemble ainsi réalisé est encapsulé dans un matériau d'encapsulation (12), définissant une fente (17), outre une fenêtre (18), fenêtre destinée à permettre l'accessibilité à la thermistance (13), et notamment la possibilité de sa mise en contact directe ou indirecte avec la canalisation (10), dont il a été fait mention précédemment.

Cette encapsulation peut résulter d'une opération de surmoulage (injection sous pression d'un matériau thermoplastique dans une cavité fermée incluant l'insert, constitué en l'espèce du circuit imprimé équipé du composant), ou d'une opération d'enrobage, mieux connu sous l'expression en langue anglaise « potting » (remplissage par gravité ou très faible pression d'une cavité sensiblement identique à la cavité mise en oeuvre pour le surmoulage, au moyen d'un produit du type thermocolle). Quelle que soit la technologie mise en oeuvre, le produit de remplissage est chauffé afm de devenir pâteux, voire liquide, pour la réalisation de la forme, et il est en outre choisi pour qu'après refroidissement, sa dureté soit compatible avec une certaine déformation élastique.

Ainsi, dans le cas du surmoulage, on peut choisir le PVC souple ou le caoutchouc thermoplastique de dureté shore 35, et dans le cas du potting, on peut choisir une thermocolle type HENKEL 6 (marque déposée).

L'ensemble ainsi encapsulé reçoit un apprêt faisant fonction d'activateur pour la polymérisation d'une colle thermo-porteuse ou thermo-conductrice (15) revêtue ensuite, notamment au niveau de la fenêtre (18), venant donc recouvrir la thermistance (13) selon un film de quelques µm.

On positionne au moyen de cette colle un radiateur (14), en contact avec la thermistance, par l'intermédiaire du film de colle thermo-conductrice, qui transmet l'énergie calorique du radiateur (14) à la thermistance (13).

Quelle que soit la technique choisie, l'objectif visé est de rendre l'assemblage final étanche aux projections. La mise en place du module (8) dans l'embase (1) réalise cette étanchéité par le biais de la compression possible et localisée de la matière souple constitutive dudit module.

On obtient de la sorte un module monolithique, pouvant recevoir tout type de composant et capteur, et en l'espèce une thermistance, venant s'enficher au niveau des fiches femelles (4) et (5) du support (1) et ce, de manière très facile par simple insertion.

On conçoit dès lors que, le support (1) peut être réalisé pour tout type d'application, puisqu'il suffit alors de remplacer le module (8) par le module souhaité, en fonction de la grandeur physique à déterminer, ou de la plage de ladite grandeur physique à mesurer.

## Revendications

1. Sonde de contact comprenant :
- un support ou embase (1), destiné à accueillir un capteur (13) d'une grandeur physique déterminée, support duquel partent les fils électriques (7) acheminant le ou les signaux détectés ou mesurés par ledit capteur (13) en vue de leur traitement ultérieur ;
- un organe (9) de fixation réversible dudit support (1), agencé de telle sorte à mettre en contact le capteur (13) avec l'élément (10) au niveau duquel on souhaite déterminer ou mesurer ladite grandeur physique ;
***caractérisée :***
- **en ce que** le capteur (13) est monté sur un module indépendant (8), enfichable au sein du support ou embase (1) ;
- **en ce que** les fils électriques dudit support sont surmoulés au sein de celui-ci, de telle sorte à définir deux fiches d'entrée femelles (4, 5), susceptibles de recevoir les connexions mâles (20) du module (8) intégrant le capteur (13) par simple insertion ;
- et **en ce que** le support (1) présente une fente (2), issue du moulage, destinée à permettre le passage d'une agrafe (9) de fixation réversible constituant l'organe de fixation dudit support, sur l'élément considéré.

2. Sonde de contact selon la revendication 1, ***caractérisée* en ce que** le support (1) présente une fenêtre (6) sur l'une de ses faces, afin de libérer l'accès au capteur (13), et permettre le contact de celui-ci avec l'élément (10) au niveau duquel on souhaite déterminer ou mesurer la grandeur physique.

3. Sonde de contact selon l'une des revendications 1 et 2, ***caractérisée* en ce que** la fente (2) présente au niveau de son entrée un moyen de blocage réversible, avantageusement issu du moulage, visant à s'opposer au retrait intempestif de l'agrafe de fixation (9) hors de ladite fente.

4. Sonde de contact selon l'une des revendications 1 à 3, ***caractérisée* en ce que** les deux fiches de connexion électrique femelles (4, 5) du support (1) sont isolées électriquement l'une de l'autre, au moyen d'une paroi plastique, également avantageusement issue de moulage.

5. Sonde de contact selon l'une des revendications 1 à 4, ***caractérisée* en ce que** le matériau de surmoulage mis en oeuvre pour réaliser le support (1), est choisi dans le groupe comprenant le polyamide 6, et le polyamide 6/6 chargé ou non.

6. Sonde de contact selon l'une des revendications 1 à 5, ***caractérisée* en ce que** le capteur (13) est constitué par une thermistance.

7. Sonde de contact selon la revendication 6, ***caractérisée* en ce que** la thermistance (13) est revêtue d'un radiateur (14), et fixée à cette dernière au moyen d'une colle thermo-porteuse ou thermo-conductrice (15).

8. Sonde de contact selon l'une des revendications 1 à 5, ***caractérisée* en ce que** le capteur (13) est constitué par un composant à effet HALL.

9. Sonde de contact selon l'une des revendications 1 à 5, ***caractérisée* en ce que** le capteur (13) est constitué par cellule photoélectrique, un mini interrupteur, et de manière générale un capteur de type électronique ou électromécanique.
